(19) Europäisches Patentamt
European Patent Office
Office européen des brevets

(11) EP 0 733 754 B1

(12) **EUROPÄISCHE PATENTSCHRIFT**

(45) Veröffentlichungstag und Bekanntmachung des Hinweises auf die Patenterteilung:
07.10.1998 Patentblatt 1998/41

(51) Int Cl.⁶: $E04C\ 2/54$, $E04C\ 2/34$

(21) Anmeldenummer: 96104183.7

(22) Anmeldetag: 15.03.1996

(54) **Hagelschlagbeständige Stegmehrfachplatte aus Polymethylmethacrylat**

Hail resistant multilayer cross-braced plate made from polymethylmethacrylate

Plaque multicouche entretoisée résistant à la grêle réalisée en polyméthylméthacrylate

(84) Benannte Vertragsstaaten:
AT BE CH DE DK ES FR GB IT LI NL SE

(30) Priorität: 24.03.1995 DE 29504997 U

(43) Veröffentlichungstag der Anmeldung:
25.09.1996 Patentblatt 1996/39

(73) Patentinhaber: **Röhm GmbH**
**64293 Darmstadt (DE)**

(72) Erfinder:
• **Benz, Volker, Dr.**
**64739 Höchst (DE)**
• **Müller, Michael, Dr.**
**64625 Bensheim (DE)**

(56) Entgegenhaltungen:
EP-A- 0 105 159          EP-A- 0 118 683

**Beschreibung**

Gebiet der Erfindung

Die Erfindung betrifft eine bruchbeständige Stegmehrfachplatte mit hoher Hagelfestigkeit aus schlagzähem Polymethacrylat SP, das bestimmte Eigenschaften aufweist, mit spezifischen geometrischen Kriterien.

Stand der Technik

Die Verwendung von Polymethylmethacrylat-Kunststoffen bei der Herstellung von Stegmehrfachplatten ist bekannt. Insbesondere für Verglasungen werden die Stegmehrfachplatten aus Polymethylmethacrylat-Kunststoffen wegen deren hoher Lichtdurchlässigkeit und deren hoher Witterungsbeständigkeit genutzt.

DE-OS 30 11 905 beschreibt beispielsweise Fensterelemente aus Stegdoppelplatten, die Lichtdurchlässigkeits- und Lichtreflexionseigenschaften vereinigen und isolierende Zwischenräume mit ruhender Luft aufweisen, um die Wärmeübertragung durch solche Fensterelemente zu verzögern.

Dabei sind die Stege in den Stegdoppelplatten solchermaßen geometrisch angeordnet und in ihren Lichtdurchlässigkeiten variiert, daß die Sonnenstrahlungsintensität nach dem Durchgang durch die Fensterelemente in Abhängigkeit von der Sonnenhöhe mehr oder minder stark ist. Bevorzugt eingesetzt werden Acrylpolymere, insbesondere Polymethylmethacrylat, als Materialien für die Fensterelemente eingesetzt.

In US-Patent 4,114,597 werden Solarkollektoren beschrieben, die aus Stegdreifachplatten bestehen, bei denen die der Sonne zugewandte Hohlkammerschicht mit Luft gefüllt ist und die der Sonne abgewandte Hohlkammerschicht mit einem Wärmeträgermedium gefüllt, das die Solarenergie absorbiert. Die Stegdreifachplatten bestehen vorzugsweise aus Polymethylmethacrylat-Kunststoff wegen dessen hoher Transparenz und dessen Witterungsbeständigkeit.

DE-OS 31 47 113 umfaßt Stegdoppelplatten, die in den Hohlkammern befindliche Leuchtkörper enthalten und die aus bruch- und schlagfesten Kunststoffen bestehen, die nicht näher spezifiziert werden. Die Forderung nach Bruch- und Schlagfestigkeit wird durch die Verwendung der erfindungsgemäßen Stegdoppelplatten als Boden- oder Wandelement begründet.

Bekannterweise ist Polymethylmethacrylat ein vergleichsweise spröder und schlagempfindlicher Kunststoff, was zu einer verminderten mechanischen Belastbarkeit von Stegmehrfachplatten aus Polymethylmethacrylat-Kunststoff führt.

In DE-OS 30 11 905 und US-A-4 114 597 wird zwar die Verwendung von schlagzäh-modifizierten Polymethylmethacrylat-Kunststoffen als "Material" für Stegmehrfachplatten vage angedeutet (DE-OS 30 11 905, Seite 20, Zeilen 35 - 37; US-A-4 114 597, Spalte 4, Zeilen 34 bis 40), es werden jedoch keine Angaben über die chemische Zusammensetzung und die mechanischen Eigenschaften sowie über Mindestanforderungen an die mechanischen Eigenschaften solcher modifizierter Polymethylmethacrylat-Kunststoffe gemacht.

Mit dem Problem der Sprödigkeit bei Stegmehrfachplatten aus Polymethylmethacrylat-Kunststoffen beschäftigen sich auch EP-A 0 105 159 und EP-A 0 118 683.

EP-A 0 105 159 beschreibt Stegmehrfachplatten mit parallelen, ebenen Außenschichten aus Polymethylmethacrylat, mit wenigstens einer Mittelschicht und mit Stegen, bei welchen die Außenschichten und die Mittelschicht einstückig miteinander verbunden sind. Die Mittelschicht ist aus einem Kunststoff mit erhöter Zähigkeit und/oder erhöter Nullviskosität im Schmelzzustand, im Vergleich zum Polymethylmethacrylat-Kunststoff aufgebaut. Durch die Mittelschicht wird die Zähigkeit der Stegmehrfachplatte erhöht und insbesondere das Durchhängen der Mittelschicht während der Extrusion des Gesamtverbundes vermieden oder vermindert.

In EP-A 0 118 683 werden mehrschichtig coextrudierte Stegdoppelplatten mit verminderter Schlagempfindlichkeit beansprucht, enthaltend zwei im wesentlichen ebene Außenwände und diese einstückig verbindende Stege, wobei die tragende Schicht der Außenwand zu mehr als der Hälfte ihrer Gesamtdicke aus einem Acrylglas, insbesondere aus Polymethylmethacrylat-Kunststoff, und an der innenliegenden Seite der Acrylglasschicht aus einer damit haftend verbundenen dünneren Innenschicht aus einem Kunststoff mit einer höheren Bruchdehnung, beispielsweise einem Polycarbonat-Kunststoff, besteht.

Sowohl in EP-A 0 105 159 als auch in EP-A 0 118 683 wird die Verwendung von schlagzäh-modifiziertem Polymethylmethacrylat-Kunststoff (EP-A 0 105 159, Seite 2, Zeilen 21 und 22; EP-A 0 118 683, Seite 4, Zeilen 10ff) angedeutet. Allerdings sind die Herstellungsverfahren der dort beschriebenen Stegdoppelplatten mit hohem apparativen Aufwand verbunden. Weiterhin sind die in EP-A 0 105 159 und in EP-A 0 118 683 zur Verminderung der Schlagempfindlichkeit verwendeten zähen Kunststoffe, wie beispielsweise Polycarbonate, Polyester oder Polysulfone, in hochgradigem Maße unbeständig gegen Witterungseinflüsse, insbesondere gegen UV-Strahlung, und müssen entsprechend stabilisert werden.

Aufgabe und Lösung

Die Aufgabe der vorliegenden Erfindung war es also, Stegmehrfachplatten aus Polymethylmethacrylat-Kunststoff wie zum Beispiel aus EP-A-0 105 159 bekannt bereitzustellen, die die Vorteile hoher Witterungsbeständigkeit und hoher Lichtdurchlässigkeit mit dem Vorteil einer hohen Bruchbeständigkeit, insbesondere bei der Belastung durch Hagelschlag, sowie dem Vorteil einer vergleichsweise einfachen Herstellungsmethode verbinden. Überraschenderweise wurde gefunden, daß diese Aufgabe hervorragend gelöst wird durch Stegmehrfachplatten, bestehend aus einem schlagzähen Polymethylmethacrylat SP, aufgebaut aus:

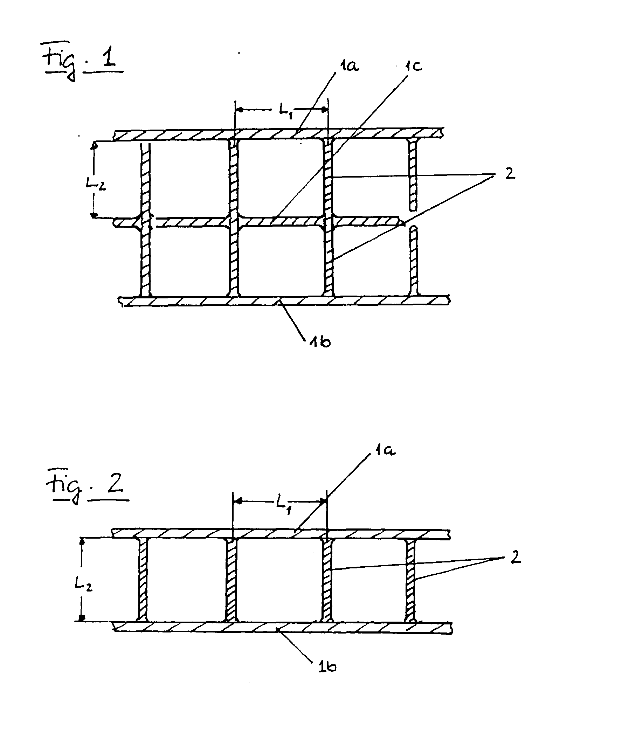

p1) 4 bis 30 Gew.-%
einer Elastomerphase E bestehend aus vernetzten Polymerisatteilchen VP, bestehend aus 60 bis 99,9 Gew.-Teilen Alkylacrylat und/oder Arylacrylat, 0,1 bis 10 Gew.-Teilen an geeigneten Vernetzungsmitteln sowie gegebenenfalls 0 bis 30 Gew.-Teilen an geeigneten monofunktionellen, ethylenisch ungesättigten Monomeren,

p2) 70 bis 96 Gew.-%
einer thermoplastischen Matrixphase M aus Polymethylmethacrylat P, das bis zu 20 Gew.-Teile, bezogen auf 100 Gew.-Teile P, an geeigneten Comonomereinheiten enthalten kann,

wobei die Brechungsindices der Elastomerphase E und der Matrixphase M um maximal $n \leq 0,02$ voneinander abweichen und die Summe von p1) und p2) 100 Gew.-% ausmacht, wenn zusätzlich zu der spezifischen Auswahl des Polymethylmethacrylats SP folgendes geometrisches Kriterium bei der Stegmehrfachplatte erfüllt ist: die an der bewitterten Seite der Stegmehrfachplatte liegenden Außengurte (Fig. 1, 2: 1a) müssen eine Dicke d aufweisen, die folgender Beziehung genügt:

$$d \text{ [mm]} \geq \frac{100 \text{ [mm x kJm}^{-2}]}{a_{cU} \text{ [kJm}^{-2}] + 30 \text{ [kJm}^{-2}]} \qquad (I),$$

wobei

d        die Dicke des Außengurts (1a) in mm und
$a_{cU}$      die Schlagzähigkeit nach Charpy in $kJm^{-2}$ gemäß ISO 179/1fU

bedeuten.

Bei Schlagzähigkeiten von 70 - 80 $kJm^{-2}$ ergibt die Prüfung in der Regel keinen Bruch des Materials. In solchen Fällen ist für $a_{cU}$ ein Wert von 80 $kJm^{-2}$ einzusetzen.

Vorzugsweise ist die Elastomerphase E Bestandteil zwei- oder mehrstufiger Emulsionspolymerisate EP, die in der äußeren Hülle aus dem die Matrixphase M bildenden Polymethylmethacrylat P bestehen. Besonders bevorzugt sind Emulsionspolymerisate EP mit einem wenigstens dreistufigen Aufbau, gebildet aus einem Kern K aus Polymethylmethacrylat P, einer ersten Schale S1 aus der Elastomerphase E und einer zweiten Schale S2 aus Polymethylmethacrylat P, wobei sich weitere Schalen entsprechend den Schalen S1 und S2 alternierend anschließen können.

Bevorzugt weisen die Außengurte (1a) Mindestdicken $d_{min}$ von 1,3 mm auf, wobei die Schlagzähigkeit $a_{cU}$ entsprechend mindestens 50 $kJm^{-2}$ beträgt. Die Hagelbeständigkeit H20 solcher Platten beträgt mindestens 2 J., vorzugsweise mindestens 5 J. (zur Hagelschlagbeständigkeit vgl. Beispiele).

Durchführung der Erfindung

Das schlagzähe Polymethylmethacrylat SP

Das schlagzähe Polymethylmethacrylat SP ist aufgebaut aus p1) 4 bis 30 Gew.-% einer Elastomerphase E und aus p2) 70 bis 96 Gew.-% einer thermoplastischen Matrixphase aus Polymethylmethacrylat P, das bis zu 20 Gew.-Teilen, bezogen auf 100 Gew.-Teile P, an geeigneten Comonomeranteilen enthalten kann, wobei die Brechungsindices der Elastomerphase E und der Matrixphase M um maximal $n \leq 0,02$ voneinander abweichen und wobei die Summe von p1) + p2) 100 Gew.-% ausmacht.

Die Elastomerphase E aus vernetzter Polymerphase VP ist aus 60 bis 99,9 Gew.-Teilen Alkylacrylat und/oder Arylacrylat, aus 0,1 bis 10 Gew.-Teilen geeigneten Vernetzungsmitteln und gegebenenfalls aus 0 bis 30 Gew.-Teilen an geeigneten monofunktionellen ethylenisch ungesättigten Monomeren aufgebaut.

Vorzugsweise werden als Alkylacrylate $C_2$ - $C_{10}$-Alkylacrylate eingesetzt, wie beispielsweise Ethylacrylat, Propylacrylat, iso-Propylacrylat, Amylacrylat, Hexylacrylat, Octylacrylat, Decylacrylat, sowie besonders bevorzugt Butylacrylat und 2-Ethylhexylacrylat. Ethylhexylacrylat. Bevorzugte Acrylate sind Phenylacrylat, Phenylethylacrylat, 3-Phenyl-1-propylacrylat, 2-Phenoxyethoxyethylacrylat, sowie besonders bevorzugt Benzylacrylat.

Die Vernetzungsmittel sind im allgemeinen Verbindungen mit mindestens zwei ethylenisch ungesättigten, radikalisch polymerisierbaren Resten. Als Vertreter für Verbindungen mit zwei ethylenisch ungesättigten, radikalisch polymerisierbaren Resten seien beispielhaft genannt: (Meth)acrylester von Diolen, wie beispielsweise Ethylenglykoldi(meth)acrylat oder 1,4-Butandioldi(meth)acrylat, aromatische Verbindungen, wie beispielsweise Divinylbenzol, sowie Verbindungen mit mindestens einer Allylgruppe, wie beispielsweise Allyl(meth)acrylat. Als Vernetzungsmittel mit drei oder mehr ethylenisch ungesättigten, radikalisch polymerisierbaren Resten seien beispielhaft Triallylcyanurat, Trimethylolpropantri(meth)acrylat sowie Pentaerythritetra(meth)acrylat genannt. Weitere Beispiele hierzu werden beispielsweise in US-P 4,513,118 angegeben.

Die gegebenenfalls in 0 bis 30 Gew.-Teilen in der Elastomerphase E enthaltenen Comonomeren, dienen vornehmlich der Angleichung des in der Regel niedrigeren Brechungsindex der Elastomerphase E an denjenigen der Matrixphase M. Vorzugsweise werden also Comonomere mit vergleichsweise hohen Brechungsindices gewählt werden, wie beispielsweise radikalisch polymerisierbare aromatische Verbindungen. Beispielhaft seien genannt: Vinyltoluol, Styrol oder α-Methylstyrol, die in solchen Mengen verwendet werden, daß sie die Witterungsbeständigkeit des schlagzähen Polymethylmethacrylats SP nicht beeinträchtigen.

Die mit der Elastomerphase E zumindest zu 5 Gew.-% kovalent verbundene Matrixphase M besteht aus einem Polymethylmethacrylat P, das aus 80 bis 100 Gew.-Teilen Methylmethacrylat-Einheiten aufgebaut ist, und weist eine Glasübergangstemperatur von wenigstens 70 Grad C auf.

Weiterhin können im Polymethylmethacrylat P 0 bis 20 Gew.-Teile weitere ethylenisch ungesättigte, radikalisch polymerisierbare Comonomereinheiten anwesend sein, vorzugsweise Alkyl(meth)acrylate mit 1 bis 4 Kohlenstoffatomen im Alkylrest. Das mittlere Molekulargewicht $M_w$ des Polymethylmethacrylats beträgt zwischen $10^4$ und $10^6$, vorzugsweise zwischen $3 \times 10^4$ und $5 \times 10^5$ Dalton (zur Bestimmung von $M_w$ vergleiche beispielsweise H.F. Mark et.a., Encyclopedia of Polymer Science and Engineering, 2nd Ed., Vol. 10, Seiten 1ff, J. Wiley, New York, 1989).

Vorzugsweise ist die Elastomerphase E Bestandteil zwei- oder mehrstufiger Emulsionspolymerisate EP, die in der äußeren Hülle aus dem die Matrixphase M bildenden Polymethylmethacrylate P bestehen. Besonders bevorzugt sind Emulsionspolymerisate EP mit einem wenigstens dreistufigen Aufbau, gebildet aus einem Kern K aus Polymethylmethacrylat P, einer ersten Schale S1 aus der Elastomerphase E und einer zweiten Schale S2 aus Polymethylmethacrylat P, wobei sich weitere Schalen entsprechend den Schalen S1 und S2 alternierend anschließen können. Der Anteil der Emulsionspolymerisate EP am schlagzähen Polymethylmethacrylat SP beträgt zwischen 5 und 70 Gew.-% bezogen auf SP, vorzugsweise zwischen 10 und 50 Gew.-% bezogen auf SP, wobei die restlichen Gewichtsanteile von dem nicht in den Latexteilchen enthaltenen Polymethylmethacrylat-Kunststoff P ausgemacht werden.

Vorzugsweise wird das schlagzähe Polymethylmethacrylat SP durch Abmischen des Emulsionspolymerisats EP mit dem Polymethylmethacrylat P hergestellt, wobei beispielsweise die Emulsionen von EP und P gemischt werden und anschließend die Wasserphase und die Emulgatoren abgetrennt werden oder wobei zunächst das Emulsionspolymerisat EP aus der wäßrigen Phase isoliert wird und anschließend mit dem, beispielsweise durch kontinuierliche Substanzpolymerisation hergestellten, Polymethylmethacrylat in der Schmelze gemischt wird. Insgesamt sollen die Latexteilchen, die das Emulsionspolymerisat EP bilden, einen Durchmesser zwischen 0,1 und 3 um, bevorzugt zwischen 0,15 und 1 um aufweisen. Prinzipiell ist der Aufbau solcher Latexteilchen und die Isolierung des Emulsionspolymerisats EP für zweistufige Emulsionspolymerisate EP beispielsweise in EP-Patent 0 033 999 (= US-Patent 4,543,383) und für dreistufige Emulsionspolymerisate EP beispielsweise in EP-A-0 113 924 (= US-Patent 4,513,118) beschrieben. Bei der wäßrigen Emulsionspolymerisation arbeitet man zweckmäßigerweise im neutralen oder leicht sauren pH-Bereich, wobei der Verwendung langkettiger Alkylsulfate bzw. Alkylsulfonate als Emulgatoren günstig ist. Als Polymerisationsinitiatoren dienen zweckmäßig die einschlägig bekannten Azoverbindungen bzw. organische oder anorganische Peroxide, wie beispielsweise Persulfate, die im allgemeinen in Mengen zwischen $10^{-3}$ und 1 Gew.-%, bezogen auf die Monomeren, verwendet werden: Zur Einstellung des zuvor beschriebenen Molekulargewichts $M_w$ des im Emulsionspolymerisat anwesenden Polymethylmethacrylats dienen die einschlägig bekannten Molekulargewichtsregler, wie beispielsweise Merkaptoverbindungen, wie 2-Ethylhexylthioglykolat oder tert.-Dodecylmercaptan.

Die Stegmehrfachplatten

Die Stegmehrfachplatten sind bevorzugt als Stegdreifachplatten (Fig. 1) und besonders bevorzugt als Stegdoppelplatten (Fig. 2) ausgestaltet und sind im wesentlichen aus dem schlagzähen Polymethylmethacrylat SP aufgebaut. In DE-U-77 37 362 (= EP-A-0 684 352) werden beispielsweise Stegdreifachplatten beschrieben, deren Stege (Fig. 1, 2) zwischen den Außenwänden geradlinig durchgehend angeordnet sind, deren Mittelgurte (1c) höchstens 3/5 der Dicke der Außengurte (1a, 1b) aufweisen und deren Gesamtdicke mindestens 25 mm beträgt.

In Fig. 2 ist eine Stegdoppelplatte dargestellt, deren Außenwände durch die Stege (2) verbunden sind, wie beispielsweise in DE-Gbm 83 02 430 beschrieben. Als Gurte (1a, 1b) werden die die Außenwände der Stegdoppelplatte bildenden Verbindungsstücke zwischen zwei Stegen bezeichnet. Bei der zuvor genannten Stegdreifachplatte existieren daneben noch Mittelgurte (Fig. 1, 1c), die die Stegplatte zusätzlich stabilisieren. Erfindungsgemäß weist der an der bewitterten Seite der Stegmehrfachplatte liegende Außengurt (1a) eine Dicke d auf, die folgender Beziehung gehorcht:

$$d \text{ [mm]} \geq \frac{100 \text{ [mm x kJm}^{-2}]}{a_{cU} \text{ [kJm}^{-2}] + 30 \text{ [kJm}^{-2}]} \qquad (I),$$

wobei

d    die Dicke des Außengurts (1a) in mm und
$a_{cU}$    die Schlagzähigkeit nach Charpy in $kJm^{-2}$ gemäß ISO 179/1fU

bedeuten.

Die Mindestdicke $d_{min}$ der Außengurte (1a) beträgt bevorzugt 1,3 mm, wobei die Schlagzähigkeit $a_{cU}$ bei $d_{min}$ entsprechend mindestens 50 $kJm^{-2}$ beträgt.

Die Herstellung der Stegmehrfachplatten erfolgt zweckmäßigerweise mit einer geeigneten Extrusionsanlage, wie für Stegdoppelplatten beispielsweise in EP-A-435 078 beschrieben, die eine Extrusionsdüse umfaßt, enthaltend zwei über die Breite der Extrusionsdüse geradlinig und parallel verlaufende, durch Lippen gebildete Schlitze zur Extrusion von zwei parallelen ebenen Außenwänden der Stegdoppelplatte und ein Kernstück, das zwischen den Schlitzen angeordnet ist und in das eine Vielzahl von Querschlitzen eingeschnitten ist, die in die Schlitze münden und zur Extrusion der Stege (2) dienen, welche die Außenwände der extrudierten Stegdoppelplatte miteinander verbinden, mit dem kennzeichnenden Merkmal, daß jeweils eine der beiden Lippen, die die Schlitze bilden, flexibel ausgebildet ist und daß die flexiblen Lippen durch eine Mehrzahl unabhängiger Stellglieder verstellbar sind. EP-A 484 721 umfaßt ebenfalls eine Vorrichtung zur Herstellung von Stegdoppelplatten, bestehend aus zwei ebenen Außenwänden und diese verbindenden Stegen, enthaltend Extrusionsdüsen zur Herstellung von flachen Bahnen, welche die Außenwände der Hohlkammerplatte bilden, in Abzugsrichtung bewegbare Zwichenträger zur Aufnahme der thermoplastischen Bahnen, Mittel zur Verbindung der Bahnen mit Stegen, Mittel zur Temperierung der Zwischenträger, Mittel zur Abtrennung der Zwischenträger vom abgekühlten Stegdoppelplattenstrang mit dem kennzeichnenden Merkmal, daß die Vorrichtung Extrusionsdüsen zur Herstellung von Strängen für die Bildung der die Außenwände verbindenden Stege enthält, die so angeordnet sind, daß die Kanten der austretenden schmelzflüssigen Stränge mit den an den Zwischenträgern haftenden Bahnen in Berührung treten.

Stegdreifachplatten können prinzipiell analog zu den für die Herstellung von Stegdoppelplatten benutzten und vorstehend beschriebenen Verfahren hergestellt werden. Ein für die Herstellung von Stegdreifachplatten geeignetes Extrusionswerkzeug hat beispielsweise folgenden Aufbau (vgl. die schon zitierte EP-A 105 159): durch einen Massekanal wird das im Extruder aufgeschmolzene schlagzähe Polymethylmethacrylat SP in einen Verteilerkanal gedrückt und fließt von dort in die die Außenschichten (Außengurte: Fig. 1; 1a, 1b) der Stegdreifachplatte formenden Kanäle, sowie in Schlitze zwischen den Kernstücken der Extrusionsdüse, wodurch Stege (Fig. 1, 2) gebildet werden. Die Kernstücke sind auf einem Balken angeordnet, in dem ein Verteilerkanal läuft. In diesen wird aufgeschmolzenes schlagzähes Polymethylmethacrylat SP, das aus dem selben zuvor genannten Extruder stammen kann, zur Bildung der Mittelschicht (Mittelgurte: Fig. 1, 1c) eingespeist und durch Kanäle in jedes einzelne Kernstück gedrückt. Die Kanäle erweitern sich fächerförmig in Richtung auf den Düsenmund und nehmen dort die volle Breite der Kernstücke ein, so daß sich die durchtretenden Ströme aus schlagzähem Polymethylmethacrylat SP mit den Strömen aus SP, die in den stegbildenden Schlitzen fließen, vereinigen. Die erfindungsgemäßen Stegmehrfachplatten können weiterhin an den Außen- und/oder den Innenseiten der Hohlkammern funktionelle Schichten aufweisen, wie beispielsweise Kratzfestbeschichtungen, Antireflexbeschichtungen, IR-reflektierende Beschichtungen, sowie schmutzabweisende oder wasserspreitende Beschichtungen. Die Beschichtung mit UV-absorbierenden Schichten wird nur für die Verminderung der Durchlässigkeit der Stegmehrfachplatten für UV-Licht relevant, nicht oder nur sehr bedingt für den Schutz der Stegmehrfachplatten selbst.

Die genannten funktionellen Schichten an den Außen- und/oder den Innenseiten der Hohlkammer der Stegmehrfachplatten, die in der Hauptsache der Vermeidung von Verunreinigungen der Verkratzungen dienen, die die Lichttransmission durch die Stegmehrfachplatte reduzieren, werden mit an sich bekannten Verfahren, wie beispielsweise Coextrusion, Tauchbeschichtung, Rakelauftrag, Bürstenauftrag oder Reverse-Roll-Coating, aufgebracht.

Vorteilhafte Wirkungen der Erfindung

Bedingt durch die spezifische geometrische Gestaltung der Stegmehrfachplatte und die spezifische Auswahl des schlagzähen Polymethylmethacryls SP als Werkstoff, vereinigt die erfindungsgemäße Stegmehrfachplatte eine Vielzahl von Vorteilen:

- hohe mechanische Beständigkeit, insbesondere hohe Hagelschlagbeständigkeit beim Einsatz als Verglasungselement,

- hohe Witterungsbeständigkeit, insbesondere gegen UV-Anteile im Sonnenlicht, ohne daß zusätzliche Schutzmaßnahmen gegen UV-Licht notwendig sind,

- hohe Lichtdurchlässigkeit, insbesondere für Tageslicht und UV-A-Strahlung beim Einsatz als Verglasungselement, insbesondere bei Gewächshäusern, sowie

- gute Wärmedämmwirkung durch die in den Hohlkammern eingeschlossene Luft beim Einsatz als großflächige Verglasungselemente.

Die folgenden Beispiele sollen die Erfindung veranschaulichen.

BEISPIELE

Die verwendeten Polymerisate für die Herstellung der Stegplatten:

1. Schlagzähes Polymethylmethacrylat (SZ-PMMA)

Als Basis für die Abmischungen der Beispiele 1 und 2 und des Vergleichsbeispiels 1 wird eingesetzt: Schlagzähmodifiziertes Polymethylmethacrylat PLEXIGLAS ® Y7H der Röhm GmbH mit 15 Gew.-% Anteil an Polybutylacrylat, erhalten durch Abmischen von 64 Gew.-% Polymethylmethacrylat PLEXIGLAS ® Y7H mit 36 Gew.-% eines Kern-Schale-Emulsionspolymerisats EP1 der Zusammensetzung 20 Gew.-Teile vernetzter Polmethylmethacrylat-Kern; 44 Gew.-Teile vernetztes -Polybutylacrylat-co-Styrol, das den selben Brechungsindex wie Polymethylmethacrylat aufweist, als erste Schale sowie 36 Gew.-Teile Polymethylmethacrylat als zweite Schale (zur Herstellung von EP 1 vgl. EP-A-113 925).

2. Standard-Polymethylmethacrylat

Als Abmischkomponente und als Material für die Herstellung der Stegplatte in Vergleichsbeispiel 2 wurde eingesetzt: PLEXIGLAS Formmasse ® Y7H der Röhm GmbH.

Herstellung der Stegplatten (SDP 10 - 32)

Die Stegplatten wurden in bekannter Weise gemäß EP-A 453 078 hergestellt. Der Abstand der Gurte betrug 10 mm, der Abstand der Stege 32 mm. Die Dicke des Obergurtes wurde von 1 mm bis 4 mm variiert. Stege und Untergurt waren 1 bis 1,5 mm dick.

Prüfung der Hagelbeständigkeit

Es wird eine Druckluft-betriebene Hagelkanone mit einem Meßwertaufnehmer für die Flugzeit der Kugel verwendet. Die Hagelkanone beschießt senkrecht eingespannte Platten mit Polyamid-Kugeln von 20 mm Durchmesser, womit Energien von 0,2 - 30 J aufgebracht werden können. Dies simuliert den natürlichen Hagel recht gut, dessen Aufprall-Energie 2 Joule (entspricht einem Korndurchmesser von ca. 22 mm) nur sehr selten übersteigt.
Die Proben werden in der Originalbreite von 1 200 mm in eine Haltevorrichtung eingebaut und werden nicht besonders vorkonditioniert.
Die Proben werden bei zurückgeschobener Kanone an der Schußwand angebracht. Hierbei ist darauf zu achten, daß die Probe möglichst biegespannungsfrei eingebaut wird, um Einspanneinflüsse zu vermeiden.
Der benötigte Luftdruck wird am Druckminderer der Preßluftflasche eingestellt. Zum Laden der Kanone wird der Verschlußschieber mittels Knopfdruck geöffnet und die entsprechende Kugel eingelegt. Nach dem Schuß wird die Auftreffstelle der Kugel bewertet.

Die Hagelbeständigkeit H 20 ist die niedrigste gemessene Energie in Joule (J) die noch einen Bruch der Probe verursacht.

Beispiel 1: Erfindungsgemäße Stegplatte

Die Stegplatte wird wie oben beschrieben aus einer Mischung von 60 % des schlagzähen Polymethylmethacrylats SZ-PMMA und 40 % PLEXIGLAS Formmasse ® Y7H extrudiert. Die Schlagzähigkeit dieser Mischung beträgt $a_{cU} = 55$ $kJm^{-2}$ (ISO 179/1fU). Aus der Formel des Hauptanspruchs $d \geq 100/a_{cU} + 30$ ergibt sich für diese Schlagzähigkeit eine Mindestdicke des Obergurtes (= der dem Hagel ausgesetzte Gurt) von 1,2 mm.

Die Dicke des Obergurtes der beispielhaften Platte betrug 1,5 mm. Die ermittelte Hagelbeständigkeit H 20 war 8 J.

Beispiel 2: Erfindungsgemäße Stegplatte

Für die Herstellung der Stegplatte wurde eine Mischung aus 80 % des schlagzähen Polymethylmethacrylates SZ-PMMA und 20 % PLEXIGLAS Formmasse ® Y7H verwendet. Die Prüfung der Schlagzähigkeit ergab "keinen Bruch".

In die Formel des Hauptanspruchs ist folglich $a_{cU} = 80$ einzusetzen. Dies ergibt $d \geq 0,9$ mm. Die beispielhafte Stegplatte wies eine Obergurtdicke von 1,1 mm auf. Die Hagelbeständigkeit war H 20 = 10 J.

Vergleichsbeispiel 1:

Die Stegplatte wird wie in Beispiel 1 extrudiert, die Obergurtdicke betrug nur 0,8 mm, war also geringer als die in Beispiel 1 berechnete Mindestdicke von 1,2 mm. Die Hagelbeständigkeit war H 20 = 1,9 J und liegt damit unter dem Grenzwert von 2 J und weit unter dem bevorzugten Wert von 5 J.

Vergleichsbeispiel 2

Die Stegplatte wird aus Standard PMMA (PLEXIGLAS Formmass Y7H) ohne Zusatz von Schlagzähmodifier extrudiert. Die Schlagzähigkeit des Standard-PMMA beträgt 15 $kJm^{-2}$. Nach der Formel des Hauptanspruchs ergäbe sich eine Mindestdicke des Obergurtes von 2,2 mm. Die Stegplatte des Beispiels hat einen Obergurt von 3,7 mm Dicke. Dennoch liegt die Hagelbeständigkeit bei nur 0,8 J.

**Patentansprüche**

1. Stegmehrfachplatten, bestehend aus einem schlagzähen Polymethylmethacrylat SP, welches aufgebaut ist aus:

p1) 4 bis 30 Gew.-%
einer Elastomerphase E aus vernetzter Polymerisatphase VP, bestehend aus 60 bis 99,9 Gew.-Teilen Alkylacrylat und/oder Arylacrylat, 0,1 bis 10 Gew.- Teilen Verbindungen mit mindestens zwei ethylenisch ungesättigten, radikalisch polymerisierbaren Doppelbindungen als geeignete Vernetzungsmittel sowie gegebenenfalls 0 bis 30 Gew.-Teilen an geeigneten monofunktionellen, ethylenisch ungesättigten Monomeren, und aus:
p2) 70 bis 96 Gew.-%
einer thermoplastischen Matrixphase M aus Polymethylmethacrylat P, das bis zu 20 Gew.-Teile, bezogen auf 100 Gew.-Teile P, an geeigneten Comonomereinheiten enthalten kann,

wobei die Brechungsindices der Elastomerphase E und der Matrixphase M um maximal $\Delta n \leq 0,02$ voneinander abweichen und die Summe von p1) und p2) 100 Gew.-% ausmacht,
dadurch gekennzeichnet,
daß die an der bewitterten Seite der Stegmehrfachplatte liegenden Außengurte eine Dicke d aufweisen, die folgender Beziehung genügt:

$$d \, [mm] \geq \frac{100 \, [mm \times kJm^{-2}]}{a_{cU} \, [kJm^{-2}] + 30 \, [kJm^{-2}]} \qquad (I),$$

wobei

d die Dicke des Außengurts (1a) in mm und

$a_{cU}$ die Schlagzähigkeit nach Charpy in kJm$^{-2}$ gemäß ISO 179/1fU

bedeuten.

**2.** Stegmehrfachplatten nach Anspruch 1, dadurch gekennzeichnet, daß die Elastomerphase E Bestandteil zwei- oder mehrstufiger Emulsionspolymerisate EP ist, welche in der äußeren Hülle aus dem die Matrixphase M bildenden Polymethylmethacrylat bestehen.

**3.** Stegmehrfachplatten nach den Ansprüchen 1 und 2, dadurch gekennzeichnet, daß die Emulsionspolymerisate EP einen wenigstens dreistufigen Aufbau aufweisen, gebildet aus einem Kern K aus Polymethylmethacrylat P, einer ersten Schale S1 aus der Elastomerphase E und einer zweiten Schale S2 aus Polymethylmethacrylat P, wobei sich weitere Schalen entsprechend den Schalen S1 und S2 alternierend anschließen können.

**4.** Stegmehrfachplatten nach den Ansprüchen 1 bis 3, dadurch gekennzeichnet, daß die Außengurte (1a) eine Min-destdicke $d_{min}$ von 1,5 mm aufweisen.

**5.** Stegmehrfachplatten nach den Ansprüchen 1 bis 4, dadurch gekennzeichnet, daß sie an den Außen- und Innenseiten der Hohlkammern funktionelle Beschichtungen aufweisen.

**6.** Verwendung der Stegmehrfachplatten nach den Ansprüchen 1 bis 5 als wärmeisolierendes Verglasungsmaterial.

**Claims**

**1.** Multi-cellular sheets comprising an impact-resistant polymethyl methacrylate SP which is synthesised from:

p1) 4 to 30 wt.% of an elastomer phase E of crosslinked polymer phase VP, consisting of 60 to 99.9 parts by weight of alkyl acrylate and/or aryl acrylate, 0.1 to 10 parts by weight of compounds having at least two ethylenically unsaturated, radically polymerisable double bonds as suitable crosslinking agents and optionally 0 to 30 parts by weight of suitable monofunctional, ethylenically unsaturated monomers, and from:

p2) 70 to 96 wt.% of a thermoplastic matrix phase M of polymethyl methacrylate P which may contain up to 20 parts by weight of suitable comonomer units, based on 100 parts by weight of P,

the refractive indices of the elastomer phase E and the matrix phase M differing from one another by a maximum $\Delta n \leq 0.02$ and the sum of p1) and p2) being 100 wt.%,
characterised in that
the outer belts located on the weathered side of the multi-cellular sheet have a thickness d which obeys the following equation:

$$d \text{ [mm]} \geq \frac{100 \text{ [mm x kJm}^{-2}]}{a_{cU} \text{ [kJm}^{-2}] + 30 \text{ [kJm}^{-2}]} \qquad \text{(I)}$$

wherein d is the thickness of the outer belt (1a) in mm and $a_{cU}$ is the impact resistance according to Charpy in kJm$^{-2}$ according to ISO 179/1fU.

**2.** Multi-cellular sheets according to claim 1, characterised in that the elastomer phase E is a component of two-stage or multi-stage emulsion polymers EP which consist, in their outer shell, of the polymethyl methacrylate which forms the matrix phase M.

**3.** Multi-cellular sheets according to claims 1 and 2, characterised in that the emulsion polymers EP have at least a three-stage structure formed from a core K of polymethyl methacrylate P, a first shell S1 of the elastomer phase E and a second shell S2 of polymethyl methacrylate P, whilst additional shells corresponding to shells S1 and S2 may be provided alternately thereon.

**4.** Multi-cellular sheets according to claims 1 to 3, characterised in that the outer belts (1a) have a minimum thickness

$d_{min}$ of 1.5 mm.

5. Multi-cellular sheets according to claims 1 to 4, characterised in that they have functional coatings on the outsides and insides of the hollow chambers.

6. Use of the multi-cellular sheets according to claims 1 to 5 as heat-insulating glazing material.

**Revendications**

1. Plaques multicouches entretoisées constituées d'un polyméthacrylate de méthyle SP résilient, qui est constitué de

   p1) 4 à 30 % en poids
   d'une phase élastomère E faite d'une phase polymère réticulée VP, constituée de 60 à 99,9 parties en poids d'acrylate d'alkyle et/ou d'acrylate d'aryle, de 0,1 à 10 parties en poids de composés ayant au moins deux doubles liaisons éthyléniquement insaturées polymérisables par voie radicalaire comme agents de réticulation appropriés ainsi que le cas échéant de 0 à 30 parties en poids de monomères éthyléniquement insaturés mono-fonctionnels appropriés, et de
   p2) 70 à 96 % en poids
   d'une phase matrice thermoplastique M en polyméthacrylate de méthyle P, qui peut contenir jusqu'à 20 parties en poids, par rapport à 100 parties en poids de P, d'unités comonomères appropriées,

   où les indices de réfraction de la phase élastomère E et de la phase matrice M s'écartent l'un de l'autre d'au maximum $\Delta n \leq 0,02$ et la somme de p1) et p2) est égale à 100 % en poids,
   caractérisées en ce que
   les plinthes extérieures situées sur le côté de la plaque multicouche entrecroisée exposé aux agents atmosphériques présentent une épaisseur d qui satisfait à la relation suivante:

$$d[mm] \geq \frac{100\left[mm \times kJm^{-2}\right]}{a_{cU}\left[kJm^{-2}\right] + 30\left[kJm^{-2}\right]} \qquad (I)$$

   dans laquelle

   d     est l'épaisseur de la plinthe externe (1a) en mm et
   $a_{cU}$   est la résilience selon Charpy en $kJm^{-2}$ selon ISO 179/1fU.

2. Plaques multicouches entretoisées selon la revendication 1,
   caractérisées en ce que
   la phase élastomère E est un composant de polymères en émulsion à deux ou plusieurs stades EP qui se composent, dans l'enveloppe extérieure, du polyméthacrylate de méthyle formant la phase matrice M.

3. Plaques multicouches entretoisées selon les revendications 1 et 2,
   caractérisées en ce que
   les polymères en émulsion EP présentent une constitution à au moins trois stades, formée d'un noyau K en polyméthacrylate de méthyle P, d'une première enveloppe S1 en phase élastomère E et d'une seconde enveloppe S2 en polyméthacrylate de méthyle P, d'autres enveloppes pouvant s'adjoindre de façon alternée correspondant aux enveloppes S1 et S2.

4. Plaques multicouches entretoisées selon les revendications 1 à 3,
   caractérisées en ce que
   les plinthes externes (1a) présentent une épaisseur minimum $d_{min}$ de 1,5 mm.

5. Plaques multicouches entretoisées selon les revendications 1 à 4,
   caractérisées en ce qu'

elles présentent sur les côtés externe et interne des chambres creuses des revêtements fonctionnels.

6. Utilisation des plaques multicouches entretoisées selon les revendications 1 à 5 comme matériau de vitrage isolant thermique.

Fig. 1

Fig. 2